# EUROPÄISCHE PATENTSCHRIFT

(11) **EP 2 399 782 B1**
(45) Veröffentlichungstag und Bekanntmachung des Hinweises auf die Patenterteilung: **08.04.2015**
(21) Anmeldenummer: 11001155.8
(22) Anmeldetag: 12.02.2011
(51) Int. Cl.: B60R 3/00, B60R 16/04, B62D 25/16

(54) **Traggestell zur seitlichen Befestigung von Anbauteilen an einem Längsträger einer Nutzfahrzeug-Tragstruktur**
Support frame for lateral fastening of attached parts to a side member of a commercial vehicle chassis
Structure porteuse pour la fixation latérale de composants de construction sur un support longitudinal d'une structure porteuse de véhicule utilitaire

(30) Priorität: 26.06.2010 DE 102010025260
(43) Veröffentlichungstag der Anmeldung: 28.12.2011
(73) Patentinhaber: MAN Truck & Bus AG, 80995 München (DE)
(72) Erfinder: Trink, Mario, 2272 Ringelsdorf (AT); Scherr, Emanuel, 1160 Wien (AT)

(56) Entgegenhaltungen:
- EP-A1- 1 624 505
- EP-A1- 1 686 637
- WO-A1-2009/030367
- DE-A1- 19 623 845
- DE-A1-102006 044 176
- US-A- 2 758 845
- US-A- 5 593 167
- US-A1- 2009 000 841
- US-B1- 6 439 329

## Beschreibung

Die Erfindung betrifft ein Traggestell zur seitlichen Befestigung von Anbauteilen an einem Längsträger einer Nutzfahrzeug-Tragstruktur nach dem Oberbegriff des Anspruchs 1. Eine solche Struktur ist aus dem Dokument EP 1624 505 A1 bekannt.

Derartige Traggestelle sind grundsätzlich bekannt, so zum Beispiel aus der DE 10 2004 055 570 A1, die eine Tragstruktur zur Aufnahme eines modularen Abgasreinigungssystems umfasst.

Weiter ist aus der DE 15 55 165 A ein sogenannter Bremsgeräteträger bekannt, auf dem die zur Bremsanlage gehörenden Geräte, wie Druckregler, Frostschützer, Ventile, Druckluftbehälter etc. angeordnet sind, wobei der Bremsgeräteträger am Fahrzeugrahmen befestigt wird. Der Bremsgeräteträger setzt sich zusammen aus zwei schalenförmigen Halteblechen und zwei Trägern zur Aufnahme von Druckluftbehältern, die durch Spannbänder auf den Trägern gehalten werden. Jeder der beiden Träger ist dabei an einem der schalenförmigen Haltebleche befestigt.

Auch aus der DE 198 14 975 B4 ist ein Trägersystem für Nutzfahrzeuge bekannt, das einen aus zwei Hälften bestehenden Halter aufweist, dessen erste Hälfte an einem vertikalen Steg eines Längsträgers außenseitig anliegend mittels Befestigungsmitteln befestigt ist und dessen zweite Halterhälfte mit einem etwa U-förmigen Profilabschnitt einen horizontal vom Steg des Längsträgers abragenden unteren Flansch formschlüssig umgreift.

Ein Halter für Zubehör an LKW-Fahrgestellrahmen ist ferner auch aus der DE 18 89 305 U bekannt.

Demgegenüber ist es Aufgabe der vorliegenden Erfindung, ein Traggestell zur seitlichen Befestigung von Anbauteilen an einem Längsträger einer Nutzfahrzeug-Tragstruktur dergestalt weiter zu optimieren, dass eine für vielfältigste Einsatzfälle geeignete Tragstruktur für eine multifunktionale Bestückung des Traggestelles zur Verfügung gestellt wird.

Diese Aufgabe wird gelöst mit den Merkmalen des Patentanspruchs 1. Vorteilhafte Ausgestaltungen hierzu sind Gegenstand der Unteransprüche.

Gemäß Anspruch 1 ist ein Traggestell zur seitlichen Befestigung von Anbauteilen an einem Längsträger einer Nutzfahrzeug-Tragstruktur vorgesehen, das einen Gestellrahmen aufweist. Das Traggestell umfasst mehrere, voneinander in Längsträgererstreckungsrichtung beabstandete Gestellrahmen-Halteelemente, die mittelbar oder unmittelbar am Längsträger anbindbar oder angebunden sind und zwischen denen ein seitlich vom Längsträger wegragender Gestellrahmen-Abstützbereich für wenigstens ein Abstützbereich-Anbauteil ausgebildet ist. Weiter ist am Gestellrahmen wenigstens eine Montagewand angeordnet, die wenigstens eine Montagevorbereitung zum Anbau wenigstens eines zusätzlichen und ein Montagewand-Anbauteil ausbildenden Anbauteils aufweist. Die wenigstens eine Montagewand kann flächig oder plattenartig oder käfigartig sein. Die wenigstens eine flächige oder plattenartige Montagewand verläuft vorzugsweise im Wesentlichen in Fahrzeugquerrichtung. Unter Fahrzeugquerrichtung wird eine Richtung verstanden, die senkrecht zur Längsträgererstreckungsrichtung ist.

Eine derartige gestellseitige Montagewand ermöglicht auf vorteilhafte Weise eine auf den jeweiligen Einsatzfall angepasste Bestückung des Traggestells mit den gewünschten Bauteilen, wobei durch die Montagevorbereitung an der Montagewand sichergestellt ist, dass die Montagewand-Anbauteile schnell und funktionssicher montiert werden können.

Besonders bevorzugt ist hierbei ein Aufbau, bei dem wenigstens ein Teil der an der Montagewand gehalterten Montagewand-Anbauteile wenigstens bereichsweise mit einem oder zumindest einem schalenartigen Abdeckelement abgedeckt und/oder abgekapselt ist. Ein derartiges schalenartiges Abdeckelement kann somit besonders empfindliche Bauteile, wie beispielsweise Steuergeräte oder dergleichen zuverlässig vor Beschädigungen im rauen Fahrbetrieb schützen. Ein derartiges schalenartiges Abdeckelement bildet somit bevorzugt ebenfalls einen Bestandteil des Traggestells und kann den entsprechenden jeweiligen Bestückungswünschen angepasst ausgebildet sein.

Besonders bevorzugt ist hierbei eine Ausgestaltung, bei der das schalenartige Abdeckelement wenigstens zum Teil durch einen ebenfalls am Gestellrahmen angebundenen Kotflügelwandbereich gebildet ist. Hierbei wird dann somit der Kotflügel in einer vorteilhaften Doppelfunktion gleichzeitig dazu verwendet, wenigstens einen Teil der zur Abdeckung der Anbauteile erforderlichen Abdeckung bereitzustellen, wodurch der Bauteilaufwand wesentlich reduziert und ein insgesamt fertigungstechnisch kompakter und preiswerter Aufbau zur Verfügung gestellt wird.

Gemäß einer hierzu konkreten Ausgestaltung kann vorgesehen sein, dass ein Abdeckelement-Kotflügelwandbereich mit einem freien Kotflügelende am Gestellrahmen-Abstützbereich abgestützt und angebunden ist, zum Beispiel randseitig abgekantet ist und mit diesem abgekanteten Flanschbereich in einer flächigen Anlageverbindung am Gestellrahmen-Abstützbereich angebunden ist. Dadurch ergibt sich eine funktionssichere Anbindung des Kotflügelwandbereichs am Traggestell, die hohen Belastungen Stand hält.

Gemäß einer hierzu zusätzlichen oder alternativen weiteren bevorzugten Ausgestaltung ist vorgesehen, dass der Abdeckelement-Kotflügelwandbereich beabstandet und vorzugsweise in etwa parallel zur Montagewand verläuft, wobei im Freiraum zwischen Montagewand und Abdeckelement-Kotflügelwandbereich wenigstens ein Montagewand-Anbauteil aufgenommen ist. Dieser Freiraum kann dann zusätzlich oder alternativ, bezogen auf die Fahrzeughochachsenrichtung, von oben her mit einem Dachelement verschlossen sein, das am Abdeckelement-Kotflügelwandbereich und/oder an der Montagewand angebunden ist oder aber auch integral mit wenigstens einem dieser beiden Bauteile ausgebildet ist. Dieses Dachelement kann zum Beispiel durch eine im Wesentlichen ebene Platte gebildet sein, die dann selbst auch wiederum Tragelement für ein weiteres Dachelement-Anbauteil sein kann.

Wie die zuvor gemachten Ausgestaltungen zeigen, ergibt sich mit den erfindungsgemäßen Ausführungsformen ein Traggestell, das hochintegrativ ist und eine multifunktionale Bestückung mit relativ geringem Bauteil- und Fertigungsaufwand ermöglicht. Ein wesentlicher Vorteil des erfindungsgemäßen Traggestelles ist dabei ferner, dass das Traggestell mit sämtlichen Anbauteilen bereits vor der Endmontage im Rahmen einer zum Beispiel Großserienfertigung vormontiert werden kann, so dass das Traggestell mitsamt seinen Anbauteilen im Rahmen der Endmontage als Ganzes am Längsträger montiert werden kann. Dadurch werden die Fertigungszeiten und die Rüstzeiten im Rahmen der Endmontage erheblich reduziert.

In den zuvor gemachten Ausführungen wurde in Verbindung mit der optionalen Anbindung eines Kotflügel-Wandbereichs am Gestellrahmen explizit die besonders bevorzugte Variante beschrieben, bei der dieser Kotflügel-Wandbereich gleichzeitig wenigstens zum Teil ein schalenartiges Abdeckelement bzw. einen Wandbereich eines solchen Abdeckelementes, mittels dem die Montagewand-Anbauteile gehäuseartig umgriffen bzw. abgedeckt werden können, ausbildet. An dieser Stelle sei jedoch ausdrücklich erwähnt, dass die Anbindung wenigstens eines Kotflügels der Fahrzeugkarosserie am Gestellrahmen vorliegend auch unabhängig von dem Vorsehen einer Montagewand beansprucht wird. Wie bereits zuvor geschildert, können mit einer derartigen Anbindung der Kotflügel bzw. wenigstens eines Kotflügels am Gestellrahmen Fertigungs- und Rüstzeiten im Rahmen der Endmontage der Großserienfertigung von Nutzfahrzeugen erheblich reduziert werden, wobei sich zudem eine hochintegrative und wenig bauteilaufwändige Lösung umsetzen und realisieren lässt.

Insgesamt gesehen erlaubt die Erfindungsidee somit einen Traggestellaufbau mit einer vorzugsweise flächigen Montagewand ohne Anbindung eines Kotflügels. Weiter ermöglicht die Erfindungsidee einen Traggestellaufbau mit einer vorzugsweise flächigen Montagewand mit Anbindung eines Kotflügels sowie schließlich einen Traggestellaufbau ohne flächige Montagewand mit Anbindung eines Kotflügels. Diese zusammenfassende Darstellung belegt nochmals die Variabilität und hohe Funktionalität der vorliegenden Erfindungsidee.

Die Montagewand, bevorzugt rechteckförmig ausgebildet, selbst kann zum Beispiel eine oder mehrere Ausnehmungen aufweisen, in die besonders raum- bzw. platzsparend ein entsprechend zugeordnetes bzw. angepasstes Anbauteil aufgenommen und gehaltert ist. Hervorragend eignet sich hierfür ein Kraftstofffilter, der in einer Ausnehmung der Montagewand wenigstens zum Teil aufgenommen ist. Ebenso können derartige Ausnehmungen vorgesehen werden, um dadurch eine gezielte Hindurchführung und gegebenenfalls auch Fixierung bzw. Halterung von Leitungen oder dergleichen zu ermöglichen.

Die Montagewand weist bevorzugt eine im Wesentlichen rechteckförmige Außenkontur auf, die sich zusätzlich oder alternativ im Wesentlichen über die gesamte Breite und Höhe des Traggestellrahmens erstreckt, so dass eine große Anbindungsfläche zur Anbindung einer Vielzahl bzw. zur Anbindung von großen Bauteilen zur Verfügung gestellt wird.

Gemäß Anspruch 1 wird an der Montagewand ein Steuergerät und/oder ein Kessel einer Reifendruckfüllanlage bzw. einer Reifendruckregelanlage gehaltert sein. Alternativ oder zusätzlich dazu wird auch noch eine Kraftstoffzusatzpumpe und/oder eine Fahrerhaus-Kipppumpe an der Montagewand gehaltert sein. Bei einer Anordnung dieser Bauteile an der Montagewand und damit am Traggestell wird mehr Bauraum im Bereich der Tragstruktur des Nutzfahrzeuges zur Verfügung gestellt, der wiederum den Einbau von dort zwingend vorzusehenden Bauteilen erleichtert und damit erhebliche konstruktive Freiheitsgrade zur Verfügung stellt.

Die Montagewand ist bevorzugt an dem Gestellrahmen-Abstützbereich und/oder mittels eines ein Gestellrahmen-Halteelement ausbildenden Montagewand-Befestigungselementes, an dem die Montagewand kraft- und/oder form- und/oder stoffschlüssig festgelegt ist, am Längsträger gehaltert. Im letzteren Falle ist das Montagewand-Befestigungselement bevorzugt durch einen U-förmig ausgebildeten Befestigungsbügel gebildet, der mit einem in bzw. bezüglich zur Fahrzeughochachsenrichtung oberen U-Bügelendbereich an einem oberen Längsträgerbereich, insbesondere an einem oberen längsträgerseitigen Flanschbereich angebunden ist und der mit einem in bzw. bezüglich zur Fahrzeughochachsenrichtung unteren U-Bügelendbereich unmittelbar an einem unteren Längsträgerbereich, insbesondere an einem unteren längsträgerseitigen Flanschbereich, oder mittelbar, unter Zwischenschaltung eines Adapterelementes an dem Längsträger angebunden ist. Mit einem derartigen U-förmigen Befestigungsbügel ergibt sich eine besonders stabile und feste Anbindung der Montagewand an dem Gestellrahmen bzw. dem Längsträger, wobei die Montagewand mitsamt ihrem Befestigungsbügel dann gleichzeitig auch ein Halteelement für den Gestellrahmen am Längsträger ausbildet. Auch diese Lösung ist ersichtlich wiederum hochintegrativ, so dass der Bauteil- und Fertigungsaufwand für den Gestellrahmen erheblich reduziert wird und der am Gestellrahmen zur Verfügung stehende Bauraum zur Anbringung von Anbauteilen optimal ausgelegt ist.

Der Gestellrahmen-Abstützbereich selbst ist bevorzugt durch mehrere voneinander beabstandete und im Wesentlichen parallel zum Längsträger verlaufende Rahmenteile gebildet. Auch wenigstens ein Teil der Halteelemente ist bevorzugt durch mehrere derartiger strebenartig ausgebildeter Rahmenteile gebildet, insbesondere dergestalt, dass für eine hohe Abstützbreite in Fahrzeughochachsenrichtung gesehen ein erstes Rahmenteil an einem oberen Längsträgerbereich und ein zweites Rahmenteil an einem demgegenüber unteren Längsträgerbereich angebunden ist. Das zweite Rahmenteil verläuft dabei in etwa horizontal, d.h. in der Ebene, die durch die Längsträger gebildet wird, und bildet im Wesentlichen Bestandteil des Gestellrahmen-Abstützbereiches bzw. ist mit dessen Bauteilen, insbesondere Rahmenteilen verbunden, während das erste Rahmenteil mit seinem dem Längsträger abgewandten Ende ebenfalls im Bereich des Gestellrahmen-Abstützbereiches angebunden ist, insbesondere dort im Bereich eines abstützbereichseitigen Rahmenteils und/oder im Bereich des freien Endes des zweiten, horizontal verlaufenden Rahmenteils angebunden ist. Mit einem derartigen streben- bzw. fachwerkartigen und im Wesentlichen dreieckförmigen Aufbau eines Halteelementes wird eine besonders stabile und hohen Belastungen Stand haltende Anbindung des Gestellrahmens am Längsträger der Nutzfahrzeug-Tragstruktur möglich, wobei ein derartig aufgebautes Halteelement auch dem Gestellrahmen selbst die erforderliche Festigkeit verleiht, um hohen Belastungen Stand zu halten.

Die Montagewand kann zum Beispiel durch ein fertigungstechnisch einfach herstellbares, zum Beispiel im Querschnitt U-förmiges Stahlblech oder ein Kunststoffmaterial gebildet sein, während die restlichen, tragenden Bauteile des Gestellrahmens bevorzugt wenigstens zum Teil durch Hohlprofilquerschnitte aus Metall oder Metalllegierungen gebildet sind.

Das Abstützbereich-Anbauteil ist durch wenigstens einen Behälter bzw. ein Behältnis, bevorzugt durch wenigstens ein großvolumiges Behältnis, zum Beispiel bzw. insbesondere ein Staufach und/oder einen Kraftstoffbehälter oder einen Harnstoffbehälter gebildet. Zudem kann, insbesondere in Verbindung mit großen Abstützbreiten im Bereich zwischen zwei am Gestellrahmen angebundenen Kotflügeln auch vorgesehen sein, weitere großvolumige Behältnisse dort abzustützen und zu haltern, zum Beispiel ein Staufach für Werkzeug oder dergleichen.

Gemäß einem weiteren Aspekt der vorliegenden Erfindung kann das Traggestell durch ein Vormontagemodul gebildet sein. Das Vormontagemodul kann vor der Montage des Gestellrahmens am Längsträger mit den Anbauteilen bestückt werden. Dadurch ergibt sich beispielsweise eine weiter gesteigerte Effizienz des Traggestells und seiner Handhabung.

Es ist im Weiteren selbstverständlich, dass die offenbarten Merkmale der Erfindung zur Erzielung weiterer Vorteile und Ausführungen beliebig miteinander kombiniert werden können.

Weitere Eigenschaften und Vorteile der Erfindung ergeben sich aus der folgenden Beschreibung von Ausführungsformen der Erfindung, unter Bezugsnahme auf die beigefügten Figuren. Die beschriebenen Ausführungsbeispiele bzw. Ausführungsformen sind rein beispielhaft und in keinster Weise beschränkend zu verstehen.

Es zeigen:
- Fig. 1a: schematisch eine Seitenansicht einer ersten Ausführungsform eines erfindungsgemäßen Traggestells an einem Längsträger einer Nutzfahrzeug-Tragstruktur,
- Fig. 1b: schematisch eine Draufsicht auf den Aufbau gemäß Fig. 1a,
- Fig. 1c: eine Schnittansicht entlang der Linie A-A der Fig. 1b,
- Fig. 1d: eine Schnittansicht entlang der Linie B-B der Fig. 1b,
- Fig. 1e: schematisch und perspektivisch eine Ansicht des Traggestells mit bestückter Montagewand,
- Fig. 1f: schematisch eine rückseitige Ansicht der Montagewand der Fig. 1e in Richtung des Pfeils A der Fig. 1e,
- Fig. 1g: schematisch die Bestückung des Traggestells mit einem Kraftstoffbehältnis sowie mittels eines die Montagewand-Anbauteile abdeckenden schalenartigen Abdeckelementes,
- Fig. 2a: schematisch eine zweite Ausführungsform eines erfindungsgemäßen Traggestells in einer Seitenansicht,
- Fig. 2b: schematisch eine Draufsicht auf die Ausgestaltung nach Fig. 2a,
- Fig. 2c: schematisch eine Schnittansicht entlang der Linie A-A der Fig. 2b,
- Fig. 2d: eine schematische Schnittansicht entlang der Linie B-B der Fig. 2b,
- Fig. 2e: eine schematische Schnittansicht entlang der Linie C-C der Fig. 2b,
- Fig. 2f: schematisch eine Ausgestaltung, bei der das Abdeckelement zum Teil durch einen am Gestellrahmen des Traggestells angebundenen Kotflügel gebildet ist, und
- Fig. 2g: schematisch eine Darstellung des Aufbaus gemäß Fig. 2f mit auch auf der gegenüberliegenden Traggestellseite angebundenen Kotflügel-Wandbereich.

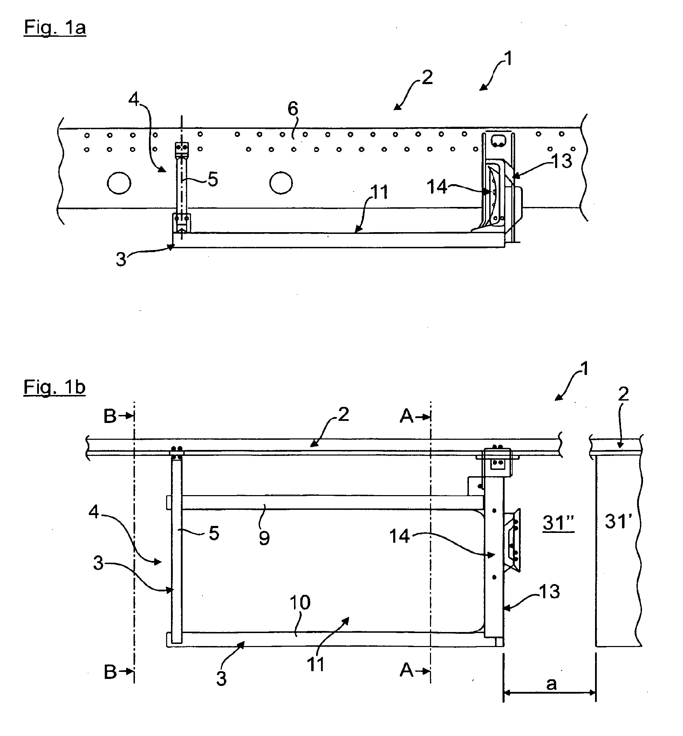

In der Fig. 1a ist schematisch und beispielhaft eine Seitenansicht auf ein erfindungsgemäßes Traggestell 1 gezeigt, das an einem Längsträger 2 einer hier nicht im Detail dargestellten und zwei derartige, parallel verlaufende Längsträger 1 aufweisenden Nutzfahrzeug-Tragstruktur seitlich angebunden ist.

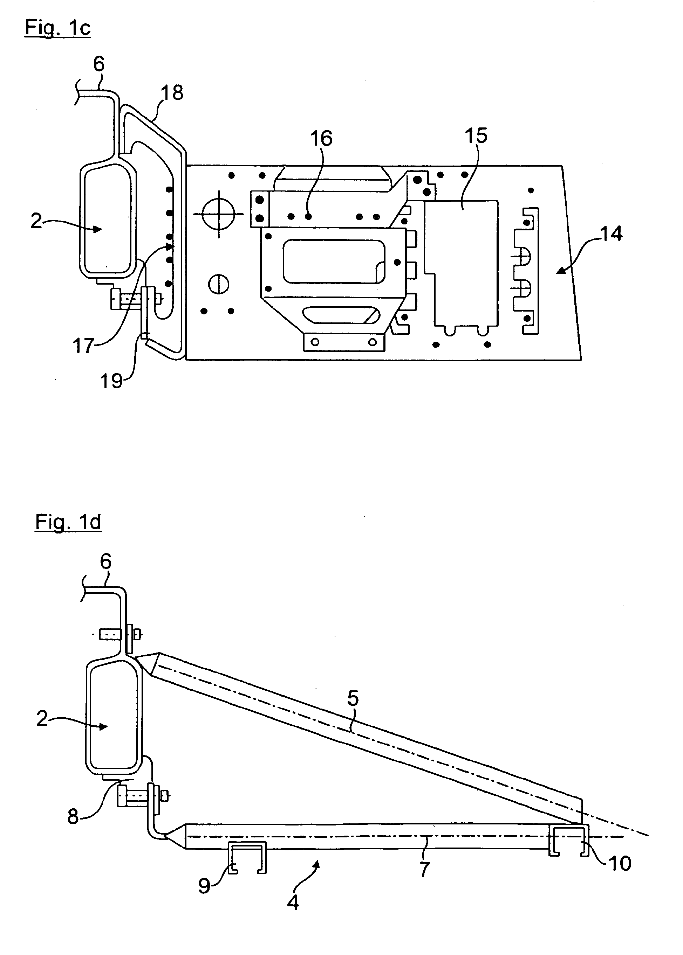

Das Traggestell 1 besteht aus einem Gestellrahmen 3, der, wie dies insbesondere auch aus den Fig. 1b bis 1d ersichtlich ist, ein erstes Halteelement 4 aufweist, das, wie dies insbesondere aus der Fig. 1d ersichtlich ist, durch ein erstes Rahmenteil 5 gebildet ist, das bevorzugt einen Rohrquerschnitt aufweist. Dieses erste Rahmenteil 5 ist mit einem dem Längsträger 2 zugewandten Endbereich, der abgekantet bzw. abgewinkelt ausgebildet ist, an einem, bezogen auf die Fahrzeughochachsenrichtung oberen Flanschabschnitt 6 des hier ebenfalls durch ein Hohlprofil gebildeten Längsträgers 2 angebunden, zum Beispiel mittels einer oder mehrerer Schraubverbindungen.

Ein zweites Rahmenteil 7 des Halteelementes 4 ist dagegen, bezogen auf die Fahrzeughochachsenrichtung, an einem unteren Ende des Längsträgers 2 angebunden, und zwar mittelbar unter Zwischenschaltung eines zum Beispiel am Längsträger 2 stoffschlüssig oder kraftschlüssig angebundenen Adapterelementes 8. Auch hier erfolgt die Anbindung wiederum zum Beispiel mittels einer oder mehrerer Schraubverbindungen. Auch das zweite Rahmenteil 7 ist im Anbindungsbereich am Adapterelement 8 abgewinkelt bzw. abgekantet, so dass dieses am Adapterelement 8, ebenso wie das erste Rahmenteil 5 am oberen Flanschabschnitt 6 in einer flächigen Anlageverbindung anliegt, was eine besonders stabile Anbindung der beiden Rahmenteile 5, 7 am Längsträger 2 ermöglicht.

Das zweite Rahmenteil 7 verläuft hier in etwa horizontal und ist zum Beispiel stoffschlüssig mittels hier lediglich beispielhaft zwei voneinander beabstandeten und im Wesentlichen parallel zueinander sowie zum Längsträger 2 verlaufenden Abstützbereich-Rahmenteilen 9, 10 verbunden, die einen Gestellrahmen-Abstützbereich 11 für zum Beispiel einen nachfolgend noch näher beschriebenen Kraftstoffbehälter 12 ausbilden.

Wie dies weiter aus der Fig. 1d ersichtlich ist, erstreckt sich das obere, erste Rahmenteil vom Anbindungsbereich am oberen Flanschabschnitt 6 ausgehend nach unten bis zum in der Bildebene der Fig. 1d rechten Abstützbereich-Rahmenteil 10 und ist dort zum Beispiel stoffschlüssig angebunden.

Auf der in Fahrzeuglängsrichtung bzw. Längsträgererstreckungsrichtung gesehen gegenüberliegenden Seite des Traggestells ist dagegen das Halteelement 13 durch eine Montagewand 14 gebildet, was insbesondere auch aus der Fig. 1c ersichtlich ist, die einen Schnitt entlang der Linie A-A der Fig. 1b zeigt.

Diese Montagewand 14 aus zum Beispiel einem Blechmaterial weist eine im Wesentlichen rechteckförmige und sich im Wesentlichen über die gesamte Traggestellhöhe bzw. -breite erstreckende Außenkontur auf, die in definierten Bereichen Ausnehmungen 15 sowie Anbindungsstellen 16 als Montagevorbereitung für eine definierte Montage bzw. für einen definierten Anbau von Anbauteilen aufweist, was nachfolgend noch näher beschrieben wird.

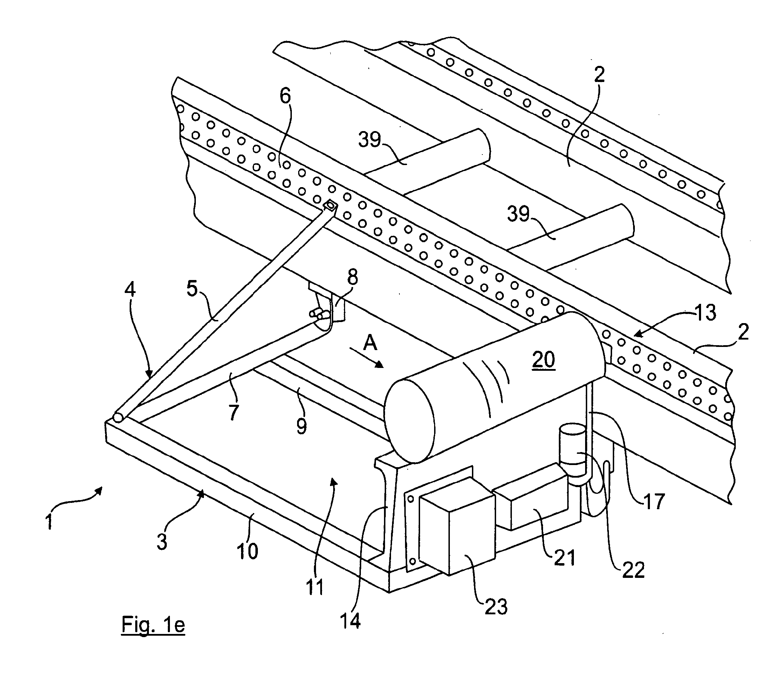

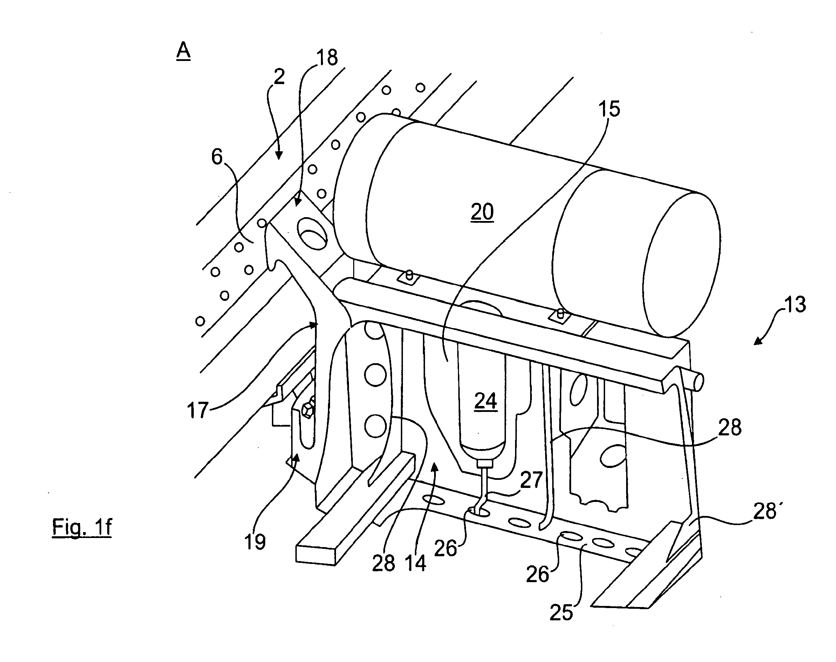

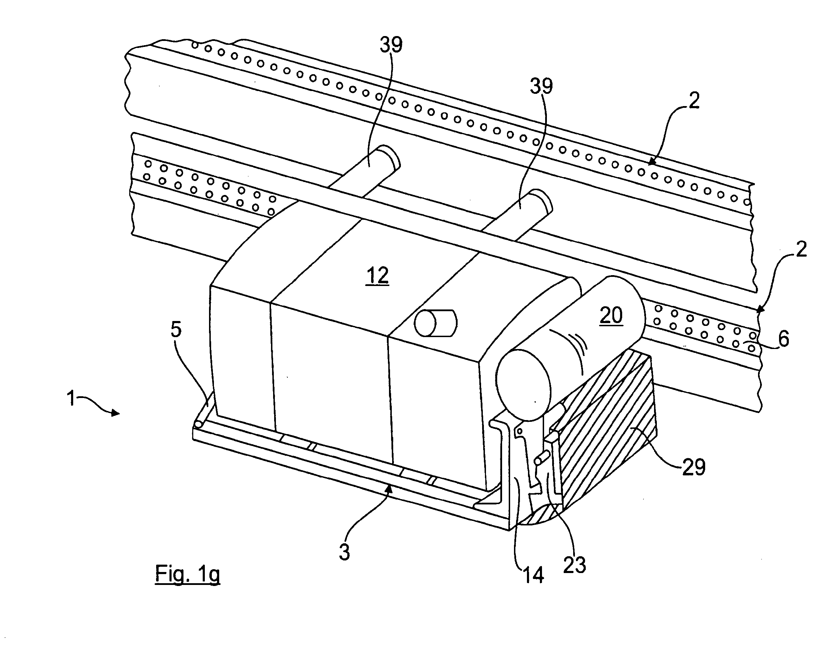

Die Montagewand 14 ist, was insbesondere auch aus der Fig. 1a und den Fig. 1e, 1f, 1g, 1h hervorgeht, zum einen an den Abstützbereich-Rahmenteilen 9, 10 festgelegt, zum Beispiel dort verschraubt und/oder stoffschlüssig angebunden. Zusätzlich dazu ist beim hier gezeigten Ausführungsbeispiel der Fig. 1 aber die Montagewand 14 auch, zum Beispiel kraftschlüssig mittels Schrauben oder aber auch alternativ und zusätzlich stoffschlüssig, an einem U-förmig ausgebildeten Befestigungsbügel 17 angebunden, wozu die Montagewand 14 an diesem Befestigungsbügel bevorzugt in einer flächigen Anlageverbindung anliegt. Dieser Befestigungsbügel 17 umgreift dann mit einem in Fahrzeughochachsenrichtung oberen U-Bügelendbereich 18 den Längsträger 2 und ist mit einem abgekanteten Anlagebereich in einer flächigen Anlageverbindung am oberen Flanschabschnitt 6 angebunden, bevorzugt mittels mehrerer kraftschlüssiger Schraubverbindungen angeschraubt.

Mit einem unteren U-Bügelendbereich 19 ist dagegen der Befestigungsbügel 17 wiederum mittelbar über ein Adapterelement 8, analog zum zweiten Rahmenteil 7 des Halteelements 4, am unteren Bereich des Längsträgers 2 fest angebunden. Auch der untere U-Bügelendbereich 19 ist bevorzugt so ausgebildet, zum Beispiel abgekantet oder abgewinkelt ausgebildet, dass eine flächige Anlageverbindung am Adapterelement 8 erfolgt.

Wie dies nunmehr insbesondere den Fig. 1e bis 1g entnommen werden kann, werden an der flächigen Montagewand 14 und den dortigen Montagevorbereitungen mehrere Anbauteile festgelegt, wie zum Beispiel ein Kessel 20 und ein Steuergerät 21 einer Reifendruckregelanlage. Ferner ist an der Montagewand 14 eine Kraftstoffzusatzpumpe 22 sowie eine Fahrerhaus-Kipppumpe 23 festgelegt. Die Festlegung erfolgt bevorzugt mittels einer Schraubverbindung.

Wie dies weiter insbesondere aus der Fig. 1f ersichtlich ist, die eine Ansicht entsprechend des Pfeils A der Fig. 1e zeigt, ist im Bereich der Ausnehmung 15 ferner ein Kraftstofffilter 24 angeordnet. Wie insbesondere in Verbindung mit diesem Kraftstofffilter gut ersichtlich ist, kann im Bereich der Montagewand 14 auch eine randseitige Abwinklung 25 vorgesehen sein, die wenigstens ein, bevorzugt aber mehrere Montagelöcher 26 aufweist, durch die Leitungen, hier beispielhaft eine Kraftstoffleitung 27, hindurchgeführt werden kann. Durch die definierte Ausbildung und Position der Montagelöcher 26 können derartige Leitungen damit besonders vorteilhaft im Bereich des Gestellrahmens 3 geführt und gehaltert werden.

Wie dies weiter aus der Fig. 1f ersichtlich ist, kann die flächige Montagewand 14 ferner durch wenigstens ein Versteifungselement 28 versteift werden. Diese Versteifungselement, die zum Beispiel durch Versteifungsbleche gebildet sind, erstrecken sich dabei bevorzugt im Wesentlichen von einem oberen Endbereich der Montagewand 14 (in Fahrzeughochachsenrichtung gesehen) nach unten und stützen sich beispielsweise im Bereich der Abstützbereich-Rahmenteile 9, 10 oder an der randseitigen Abwinklung 25 ab. Wie dies insbesondere in Verbindung mit dem Versteifungselement 28' gezeigt ist, kann die Versteifung auch integral an der Montagewand 14 ausgebildet sein oder aber auch, wie durch die beiden anderen Versteifungselemente 28 gezeigt, durch separate Bauteile gebildet sein.

Wie bereits zuvor angedeutet, ist im Bereich zwischen den beiden Halteelementen 4, 13, der Gestellrahmen-Abstützbereich 11, ausgebildet, in dem, im Wesentlichen "formschlüssig" der Kraftstoffbehälter 12 aufgenommen und montiert ist. Der Fig. 1g kann weiter entnommen werden, dass im hier gezeigten Beispielfall bis auf den Kessel 20 sämtliche anderen Montagewand-Anbauteile 21, 22, 23 und 24 nach außen hin wenigstens bereichsweise mittels eines schalenartigen Abdeckelementes, das hier beispielhaft durch ein Abdeckblech 29 gebildet ist, abgedeckt bzw. abgekapselt sind, wodurch diese Bauteile gegen die Umgebung abgeschirmt sind. Das Abdeckblech 29 wird dabei ebenfalls an der Montagewand 14 bzw. im Bereich des Gestellrahmen-Abstützbereichs 11 festgelegt.

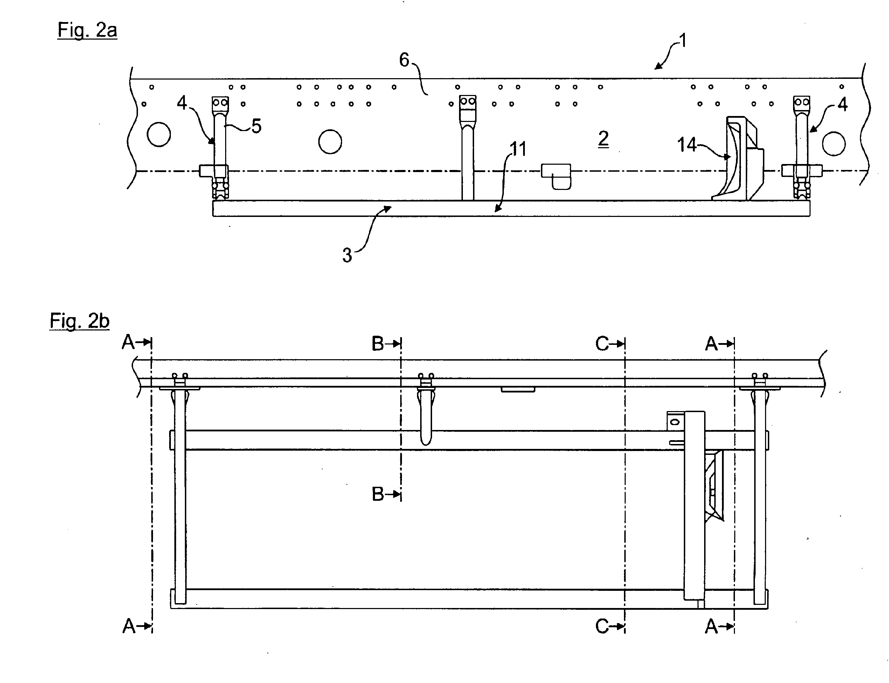

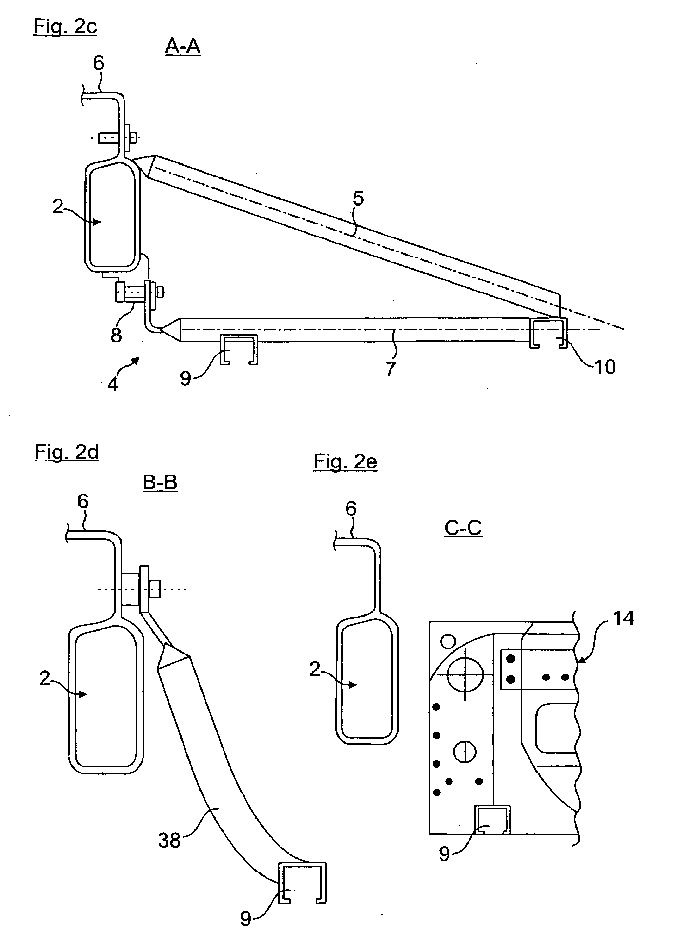

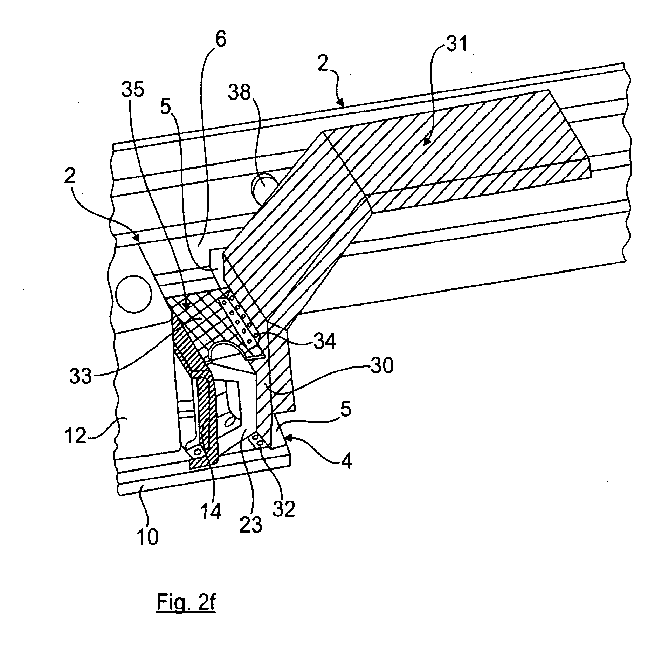

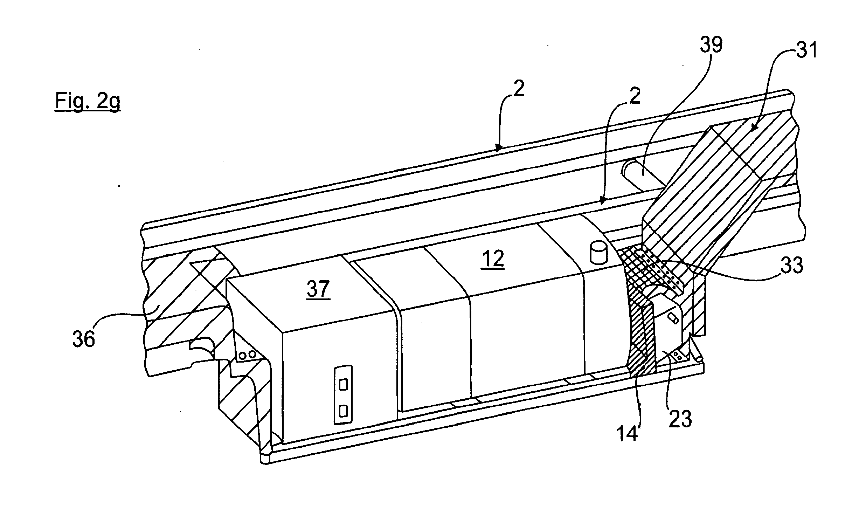

Bei dieser Ausführungsform der Fig. 1 ist somit am Traggestell 1, anders als dies bei der nachfolgend beschriebenen Fig. 2 der Fall ist, kein Kotflügel angebunden. Vielmehr ist hier dann der Kotflügel 31' beabstandet vom montagewandseitigen Traggestellaufbau angeordnet (Abstand a), was in der Fig. 1b lediglich äußerst schematisch dargestellt ist. Im Freiraum zwischen Kotflügel 31' und Traggestell 1 bzw. Montagewand 14 kann dann zum Beispiel gemäß einer besonders bevorzugten Ausgestaltung eine hier nicht dargestellte Stütze, zum Beispiel eine hydraulische Stütze, des Fahrzeugaufbaus angeordnet sein. Dieser Stützenfreiraum ist hier mit dem Bezugszeichen 31" gekennzeichnet. Der Kotflügel 31' ist hier bevorzugt am Längsträger 2 angebunden.

In der Fig. 2f ist schließlich eine weitere alternative Ausgestaltung gezeigt, bei der das Abdeckelement zur Abdeckung der Montagewand-Anbauteile zum Teil durch einen Kotflügel-Wandbereich 30 eines mittels dieses Kotflügel-Wandbereichs 30 ebenfalls am Gestellrahmen 3 angebundenen Kotflügels ausgebildet ist.

Dazu weist der Kotflügel-Wandbereich 30 am freien Kotflügelende einen hier beispielhaft abgewinkelt bzw. abgekantet ausgebildeten Kotflügelanbindungsbereich 32 auf, der am Gestellrahmen-Abstützbereich 11, insbesondere an einem dort über die Montagewand 14 hinaus verlängerten Abstützbereich-Rahmenteil 9, 10 aufliegt und mit diesem in einer flächigen Anlageverbindung verbunden ist. Der Kotflügel-Wandbereich 30 erstreckt sich dann im Wesentlichen parallel und beabstandet von der Montagewand 14 in Fahrzeughochachsenrichtung gesehen nach oben, bevor er dann abgewinkelt bzw. abgebogen wird.

Um die im Freiraum zwischen dem Kotflügel-Wandbereich 30 und der Montagewand 14 aufgenommenen Montagewand-Abauteile auch von oben her abzudecken, ist eine Dachplatte 33 vorgesehen, zum Beispiel aus einem Blechmaterial, die sowohl am Kotflügel-Wandbereich 30 als auch an der Montagewand 14 angebunden ist, zum Beispiel mittels einer hier lediglich äußerst schematisch dargestellten kraftschlüssigen Schraubverbindung 34. Die Schraubverbindung 34 ist für die Dachplatte 33 hier nur im Bereich des Kotflügel-Wandbereichs 30 gezeigt, kann aber auf der Seite der Montagewand genauso ausgebildet sein.

Wie dies der Fig. 2f weiter entnommen werden kann, ist im Bereich oberhalb der Dachplatte 33 hier ein weiterer Montagefreiraum 35 ausgebildet, in dem dann zum Beispiel wiederum, wie zuvor ein Kessel 20 einer Reifendruckregelanlage montiert werden kann.

Der Fig. 2f kann zudem weiter entnommen werden, dass in Verbindung mit der Anbindung eines Kotflügels 31 am Gestellrahmen 3 bzw. am Traggestell 1 die Montagewand 14 nicht unbedingt über einen Befestigungsbügel 17 am Längsträger 2 angebunden werden muss und damit nicht unbedingt ein Halteelement entsprechend dem Halteelement 13 ausbilden muss. Vielmehr kann hier dann, wie dies lediglich äußerst schematisch durch das zum Teil durch den Kotflügel-Wandbereich 30 verdeckte erste Rahmenteil 5 dargestellt ist, auch auf dieser montagewandseitigen Seite des Traggestells 1 eine Anbindung am Längsträger 2 mittels einem dem Halteelement 4 entsprechenden identischen Aufbau erfolgen.

An dieser Stelle sei auch darauf hingewiesen, dass zum Beispiel insbesondere in Verbindung mit den Fig. 2f und 2g sehr gut der Aufbau der Nutzfahrzeug-Tragstruktur mittels zweier Längsträger 2 ersichtlich ist, die über hier lediglich äußerst schematische Querträger 36 verbunden sind.

In der Fig. 2g ist schließlich eine Ausgestaltung gezeigt, bei der auf der in der Bildebene rechten Seite die Anbindung des Kotflügels 31 in der eben geschilderten Art und Weise erfolgt und gleichzeitig auch auf der im Längsträgererstreckungsrichtung und damit in Fahrzeuglängsrichtung gegenüberliegenden Seite des Traggestells 1 ein weiterer Kotflügel 36 am Gestellrahmen 3 angebunden ist. Bei dieser Ausführungsform erstreckt sich somit der Gestellrahmen-Abstützbereich und damit das Traggestell 1 zwischen zwei Kotflügeln 31, 36 und weist damit eine große Abstützbreite auf. In diesem Fall kann dann zum Beispiel zusätzlich zu einem Kraftstoffbehälter 12 noch ein weiteres Funktionsteil 37, zum Beispiel ein Staufach oder dergleichen am Gestellrahmen 3 gehaltert sein.

Dieser grundsätzlich andere Aufbau, wie er eben in den Fig. 2f und 2g geschildert worden ist, ist nochmals - ohne Anbauteile - in den Fig. 2a bis 2e im Detail dargestellt. Dort ist insbesondere aus den Fig. 2a und 2i sehr gut ersichtlich, dass die Montagewand 14 hier nicht mittels eines Befestigungsbügels 17 am Längsträger 2 gehaltert ist und damit ein Halteelement ausbildet, was aber grundsätzlich der Fall sein kann. Vielmehr ist hier die Montagewand 14 so an den, bezogen auf die Bildebene der Fig. 2a und 2b rechten Rand und damit das dortige Halteelement 4 herangerückt, dass dazwischen ein Freiraum zur Anbindung der Anbauteile an der Montagewand 14 zur Verfügung gestellt wird und gleichzeitig dort gegebenenfalls auch ein Kotflügel-Wandbereich 30 integriert und am Gestellrahmen 3 angebunden werden kann, wie dies zuvor beschrieben worden ist.

Um insbesondere in einem mittigen Bereich des Gestellrahmen-Abstützbereichs 11 dennoch eine stabile Anbindung am Längsträger 2 zu ermöglichen, ist hier, wie dies insbesondere aus der Fig. 2d ersichtlich ist, ein weiteres Rahmenteil 38, das ebenfalls wiederum, wie die zuvor beschriebenen Rahmenteile 9, 10 und 5, 7 durch ein Hohlprofil gebildet sein kann, am oberen Flanschabschnitt 6 sowie hier beispielhaft am Längsträger 2 zugewandten inneren Abstützbereich-Rahmenteil 9 angebunden.

### Bezugszeichenliste

- 1: Traggestell
- 2: Längsträger
- 3: Gestellrahmen
- 4: Halteelement
- 5: erstes Rahmenteil
- 6: Flanschabschnitt
- 7: zweites Rahmenteil
- 8: Adapterelement
- 9: Abstützbereich-Rahmenteil
- 10: Abstützbereich-Rahmenteil
- 11: Gestellrahmen-Abstützbereich
- 12: Kraftstoffbehälter
- 13: Halteelement
- 14: Montagewand
- 15: Ausnehmung
- 16: Anbindungsstelle
- 17: Befestigungsbügel
- 18: oberer U-Bügelendbereich
- 19: unterer U-Bügelendbereich
- 20: Kessel
- 21: Steuergerät
- 22: Kraftstoffzusatzpumpe
- 23: Fahrerhaus-Kipppumpe
- 24: Kraftstofffilter
- 25: Randseitige Abwinklung
- 26: Montageloch
- 27: Kraftstoffleitung
- 28: Versteifungselement
- 29: Abdeckblech
- 30: Kotflügel-Wandbereich
- 31: Kotflügel
- 32: Kotflügelanbindungsbereich
- 33: Dachplatte
- 34: Schraubverbindung
- 35: Montagefreiraum
- 36: Querträger
- 37: Funktionsteil
- 38: Rahmenteil

## Patentansprüche

1. Traggestell zur seitlichen Befestigung von Anbauteilen an einem Längsträger einer Nutzfahrzeug-Tragstruktur, mit einem Gestellrahmen (3), der mehrere, voneinander in Längsträgererstreckungsrichtung beabstandete Gestellrahmen-Halteelemente aufweist, die mittelbar oder unmittelbar am Längsträger (2) angebunden sind und zwischen denen ein seitlich vom Längsträger (2) wegragender Gestellrahmen-Abstützbereich (11) für wenigstens ein Abstützbereich-Anbauteil ausgebildet ist, wobei am Gestellrahmen (3) wenigstens eine im Wesentlichen in Fahrzeugquerrichtung verlaufende flächige Montagewand (14) angeordnet ist, die wenigstens eine Montagevorbereitung zum Anbau wenigstens eines zusätzlichen und ein Montagewand-Anbauteil ausbildenden Anbauteils (20, 21, 22, 23) aufweist, **dadurch gekennzeichnet, dass** an der Montagewand (14) ein Steuergerät (21) und/oder ein Kessel (20) einer Reifendruckfüll- oder -regelanlage und/oder eine Kraftstoffzusatzpumpe (22) und/oder eine Fahrerhaus-Kipppumpe (23) als Montagewand- Anbauteil gehaltert ist.

2. Traggestell nach Anspruch 1, **dadurch gekennzeichnet, dass** wenigstens ein Teil der an der Montagewand (14) gehalterten Montagewand-Anbauteile wenigstens bereichsweise mit einem schalenartigen Abdeckelement (29; 30) abgedeckt und/oder abgekapselt ist.

3. Traggestell nach Anspruch 1 oder 2, **dadurch gekennzeichnet, dass** am Gestellrahmen (3) ferner wenigstens ein Kotflügel (31, 36) der Fahrzeugkarosserie angebunden ist.

4. Traggestell nach Anspruch 2 oder 3, **dadurch gekennzeichnet, dass** das schalenartige Abdeckelement wenigstens zum Teil durch einen Abdeckelement-Kotflügelwandbereich (30) gebildet ist.

5. Traggestell nach Anspruch 4, **dadurch gekennzeichnet, dass** der Abdeckelement-Kotflügelwandbereich (30) mit einem freien Kotflügelende am Gestellrahmen-Abstützbereich (11) abgestützt und angebunden ist,
dass der Abdeckelement-Kotflügelwandbereich (30) beabstandet und vorzugsweise im Wesentlichen parallel zur Montagewand (14) verläuft, wobei im Freiraum zwischen Montagewand (14) und Abdeckelement-Kotflügelwandbereich (30) wenigstens ein Montagewand-Anbauteil (20, 21, 22, 23, 24) aufgenommen ist,
dass der Freiraum wenigstens von oben her mit einem Dachelement (33) verschlossen ist, das am Abdeckelement-Kotflügelwandbereich (30) und/oder an der Montagewand (14) angebunden ist oder integral mit wenigstens einem der beiden Bauteile ausgebildet ist.

6. Traggestell nach einem der Ansprüche 2 bis 5, **dadurch gekennzeichnet, dass** jeweils ein Kotflügel (31, 36) auf in Längsträgererstreckungsrichtung gegenüberliegenden Gestellrahmenseiten angebunden ist.

7. Traggestell nach einem der Ansprüche 1 bis 6, **dadurch gekennzeichnet, dass** die Montagewand (14) wenigstens eine Ausnehmung (15) aufweist, in der ein Kraftstofffilter (24) aufgenommen und gehaltert ist und/oder durch die Leitungen (27) und/oder Bauteile von Anbauteilen hindurchgeführt sind.

8. Traggestell nach einem der Ansprüche 1 bis 7, **dadurch gekennzeichnet, dass** die Montagewand (14) eine im Wesentlichen rechteckförmige Außenkontur aufweist und/oder dass sich die Montagewand (14) im Wesentlichen über die gesamte Traggestellbreite und Traggestellhöhe erstreckt.

9. Traggestell nach einem der Ansprüche 1 bis 8, **dadurch gekennzeichnet, dass** die Montagewand (14) an dem Gestellrahmen-Abstützbereich (11) gehaltert ist und/oder mittels eines ein Gestellrahmen-Halteelement (4) ausbildenden Montagewand-Befestigungselementes (17), an dem die Montagewand (14) kraft- und/oder form- und/oder stoffschlüssig festgelegt ist, am Längsträger (2) gehaltert ist.

10. Traggestell nach Anspruch 9, **dadurch gekennzeichnet, dass** das Montagewand-Befestigungselement durch einen U-förmig ausgebildeten Befestigungsbügel (17) ausgebildet ist, der mit einem in Fahrzeughochachsenrichtung oberen U-Bügelendbereich (18) an einem oberen Längsträgerbereich, insbesondere an einem oberen längsträgerseitigen Flanschbereich (6), angebunden ist und der mit einem in Fahrzeughochachsenrichtung unteren U-Bügelendbereich (19) unmittelbar an einem unteren Längsträgerbereich, insbesondere an einem unteren längsträgerseitigen Flanschbereich, oder mittelbar, unter Zwischenschaltung eines Adapterelementes (8), an dem Längsträger (2) angebunden ist.

11. Traggestell nach einem der Ansprüche 1 bis 10, **dadurch gekennzeichnet, dass** der Gestellrahmen-Abstützbereich (11) durch mehrere voneinander beabstandete und im Wesentlichen parallel zum Längsträger (2) verlaufende Rahmenteile (9, 10) gebildet ist.

12. Traggestell nach einem der Ansprüche 1 bis 11, **dadurch gekennzeichnet,**
**dass** wenigstens ein Teil der Halteelemente (4) durch mehrere strebenartig ausgebildete Rahmenteile (5, 7) gebildet ist, von denen ein erstes Rahmenteil (5), in Fahrzeughochachsenrichtung gesehen, an einem oberen Längsträgerbereich und ein zweites Rahmenteil (7) an einem demgegenüber unteren Längsträgerbereich angebunden ist,
**dass** das zweite Rahmenteil (7) in etwa horizontal verläuft und Bestandteil des Gestellrahmens-Abstützbereichs (11) bildet bzw. mit dessen Bauteilen verbunden ist, und
**dass** das erste Rahmenteil (5) mit seinem dem Längsträger (2) abgewandten Ende ebenfalls im Bereich des Gestellrahmen-Abstützbereiches (11) angebunden ist, insbesondere dort im Bereich eines abstützbereichsseitigen Rahmenteils (10) und/oder im Bereich des freien Endes des zweiten, horizontal verlaufenden Rahmenteils (7) angebunden ist.

13. Traggestell nach einem der Ansprüche 1 bis 12, **dadurch gekennzeichnet, dass** die Montagewand (14) durch ein vorzugsweise im Querschnitt U-förmiges Stahlblech oder ein Kunststoffmaterial gebildet ist, während die restlichen tragenden Bauteile des Gestellrahmens (3) wenigstens zum Teil durch Hohlprofilquerschnitte aus Metall oder Metalllegierungen gebildet sind.

14. Traggestell nach einem der Ansprüche 1 bis 13, **dadurch gekennzeichnet, dass** das Abstützbereich-Anbauteil wenigstens ein Behältnis, insbesondere ein Staufach und/oder ein Kraftstoff- oder Harnstoffbehältnis (12), gebildet ist.

15. Traggestell nach einem der Ansprüche 1 bis 14, **dadurch gekennzeichnet, dass** das Traggestell (1) durch ein Vormontagemodul gebildet ist, das vor der Montage des Gestellrahmens (3) am Längsträger (2) mit den Anbauteilen (12, 20, 21, 22, 23, 24) bestückt wird.

## Claims

1. A support frame for lateral fastening of attached parts to a side member of a commercial vehicle chassis, with a mounting frame (3) which has a plurality of mounting-frame holding elements which are spaced apart from one another in the direction of extent of the side member, are connected indirectly or directly to the side member (2) and between which a mounting-frame supporting region (11) projecting laterally away from the side member (2) and intended for at least one supporting-region attached part is formed, wherein at least one planar mounting wall (14) running substantially in the transverse direction of the vehicle is arranged on the mounting frame (3), said mounting wall having at least one mounting preparation means for the attachment of at least one additional attached part (20, 21, 22, 23) forming a mounting-wall attached part, **characterized in that** a control device (21) and/or a reservoir (20) of a tyre-pressure-filling or -regulating system and/or an additional fuel pump (22) and/or a driver's cab tilting pump (23) is held on the mounting wall (14) as a mounting-wall attached part.

2. The support frame according to Claim 1, **characterized in that** at least some of the mounting-wall attached parts held on the mounting wall (14) are covered and/or encapsulated at least in regions by a shell-like covering element (29; 30).

3. The support frame according to Claim 1 or 2, **characterized in that** furthermore at least one wing (31, 36) of the vehicle body is connected to the mounting frame (3).

4. The support frame according to Claim 2 or 3, **characterized in that** the shell-like covering element is at least partially formed by a covering-element wing wall region (30).

5. The support frame according to Claim 4, **characterized in that** the covering-element wing wall region (30) is supported on and connected to the mounting-frame supporting region (11) by a free wing end,
**in that** the covering-element wing wall region (30) is spaced apart from, and preferably runs substantially parallel to, the mounting wall (14), wherein at least one mounting-wall attached part (20, 21, 22, 23, 24) is accommodated in the clearance between mounting wall (14) and covering-element wing wall region (30),
**in that** the clearance is closed at least from above by a roof element (33) which is connected to the covering-element wing wall region (30) and/or to the mounting wall (14) or is formed integrally with at least one of the two components.

6. The support frame according to one of Claims 2 to 5, **characterized in that** a respective wing (31, 36) is connected on mounting-frame sides which are opposite in the direction of extent of the side member.

7. The support frame according to one of Claims 1 to 6, **characterized in that** the mounting wall (14) has at least one recess (15) in which a fuel filter (24) is accommodated and held and/or trough which lines (27) and/or components of attached parts are guided.

8. The support frame according to one of Claims 1 to 7, **characterized in that** the mounting wall (14) has a substantially rectangular outer contour, and/or **in that** the mounting wall (14) extends substantially over the entire support frame width and support frame height.

9. The support frame according to one of Claims 1 to 8, **characterized in that** the mounting wall (14) is held on the mounting-frame supporting region (11) and/or is held on the side member (2) by means of a mounting-wall fastening element (17) which forms a mounting-frame holding element (4) and to which the mounting wall (14) is fixed non-positively and/or positively and/or in an integrally bonded manner.

10. The support frame according to Claim 9, **characterized in that** the mounting-wall fastening element is formed by a fastening clip (17) which is of U-shaped design and is connected by an upper U-clip end region (18), in the direction of the vertical axis of the vehicle, to an upper side member region, in particular to an upper side-member-side flange region (6), and which is connected by a lower U-clip end region (19), in the direction of the vertical axis of the vehicle, directly to a lower side member region, in particular to a lower side-member-side flange region, or indirectly, with the interconnection of an adapter element (8), to the side member (2).

11. The support frame according to one of Claims 1 to 10, **characterized in that** the mounting-frame supporting region (11) is formed by a plurality of frame parts (9, 10) which are spaced apart from one another and run substantially parallel to the side member (2).

12. The support frame according to one of Claims 1 to 11, **characterized in that** at least some of the holding elements (4) are formed by a plurality of frame parts (5, 7) which are designed in the manner of struts and of which a first frame part (5), as seen in the direction of the vertical axis of the vehicle, is connected to an upper side member region, and a second frame part (7) is connected to a side member region which is lower in comparison thereto,
**in that** the second frame part (7) runs approximately horizontally and forms part of the mounting-frame supporting region (11) or is connected to components thereof, and
**in that** the first frame part (5), by the end thereof facing away from the side member (2), is likewise connected in the region of the mounting-frame supporting region (11), in particular is connected there in the region of a supporting-region-side frame part (10) and/or in the region of the free end of the second, horizontally running frame part (7).

13. The support frame according to one of Claims 1 to 12, **characterized in that** the mounting wall (14) is formed by a preferably cross-sectionally U-shaped steel plate or a plastics material while the remaining supporting components of the mounting frame (3) are at least partially formed by hollow profile cross sections made from metal or metal alloys.

14. The support frame according to one of Claims 1 to 13, **characterized in that** the supporting-region attached part is formed by at least one container, in particular a storage compartment and/or a fuel tank or urea tank (12).

15. The support frame according to one of Claims 1 to 14, **characterized in that** the support frame (1) is formed by a preassembly module which is equipped with the attached parts (12, 20, 21, 22, 23, 24) before the mounting frame (3) is installed on the side member (2).

## Revendications

1. Bâti de support pour la fixation latérale de pièces rapportées sur un longeron d'une structure porteuse de véhicule utilitaire, comprenant un cadre de bâti (3) qui comprend plusieurs éléments de retenue de cadre de bâti espacés les uns des autres dans la direction de l'étendue du longeron, lesquels éléments de retenue sont attachés directement ou indirectement au longeron (2) et entre lesquels éléments de retenue est réalisée une région de support (11) de cadre de bâti faisant saillie latéralement à partir du longeron (2) pour au moins une pièce rapportée de région de support, au moins une paroi de montage plate (14) s'étendant essentiellement dans la direction transversale du véhicule étant disposée sur le cadre de bâti (3), laquelle paroi de montagne présente au moins une préparation au montage pour l'installation d'au moins une pièce rapportée (20, 21, 22, 23) supplémentaire et formant une pièce rapportée de paroi de montage, **caractérisé en ce qu'**un appareil de commande (21) et/ou un réservoir (20) d'un système de remplissage sous pression des pneus ou de réglage de pression des pneus et/ou une pompe auxiliaire de carburant (22) et/ou une pompe de basculement (23) de la cabine du conducteur sont supportés sur la paroi de montage (14) en tant que pièce rapportée de paroi de montage.

2. Bâti de support selon la revendication 1, **caractérisé en ce qu'**au moins une partie des pièces rapportées de paroi de montage supportées sur la paroi de montage (14) sont recouvertes et/ou encapsulées au moins dans certaines régions par un élément de recouvrement (29 ; 30) de type coque.

3. Bâti de support selon la revendication 1 ou 2, **caractérisé en ce qu'**en outre au moins une aile (31, 36) de la carrosserie de véhicule est attachée au cadre de bâti (3).

4. Bâti de support selon la revendication 2 ou 3, **caractérisé en ce que** l'élément de recouvrement de type coque est formé au moins en partie par une région de paroi d'aile (30) formant élément de recouvrement.

5. Bâti de support selon la revendication 4, **caractérisé en ce que** la région de paroi d'aile (30) formant élément de recouvrement est supportée et attachée à la région de support (11) de cadre de bâti par une extrémité libre d'aile,
**en ce que** la région de paroi d'aile (30) formant élément de recouvrement s'étend de manière espacée de la paroi de montage (14) et de préférence essentiellement parallèlement à celle-ci, au moins une pièce rapportée (20, 21, 22, 23, 24) de paroi de montage étant reçue dans l'espace libre entre la paroi de montage (14) et la région de paroi. d'aile (30) formant élément de recouvrement,
**en ce que** l'espace libre est fermé au moins par le dessus par un élément de toit (33) qui est attaché à la région de paroi d'aile (30) formant élément de recouvrement et/ou à la paroi de montage (14) ou est réalisé d'un seul tenant avec au moins l'un des deux composants.

6. Bâti de support selon l'une quelconque des revendications 2 à 5, **caractérisé en ce qu'**une aile (31, 36) est respectivement attachée sur des côtés de cadre de bâti opposés dans la direction de l'étendue du longeron.

7. Bâti de support selon l'une quelconque des revendications 1 à 6, **caractérisé en ce que** la paroi de montage (14) comprend au moins un évidement (15) dans lequel est reçu et supporté un filtre à carburant (24) et/ou à travers lequel sont guidé(e)s des conduites (27) et/ou des composants de pièces rapportées.

8. Bâti de support selon l'une quelconque des revendications 1 à 7, **caractérisé en ce que** la paroi de montage (14) présente un contour extérieur essentiellement rectangulaire et/ou **en ce que** la paroi de montage (14) s'étend essentiellement sur toute la largeur du bâti de support et sur toute la hauteur du bâti de support.

9. Bâti de support selon l'une quelconque des revendications 1 à 8, **caractérisé en ce que** la paroi de montage (14) est supportée sur la région de support (11) de cadre de bâti et/ou est supportée sur le longeron (2) au moyen d'un élément de fixation (17) de paroi de montage formant un élément de retenue (4) de cadre de bâti, auquel élément de fixation la paroi de montage (14) est fixée par engagement par force et/ou par engagement par complémentarité de formes et/ou par liaison de matière.

10. Bâti de support selon la revendication 9, **caractérisé en ce que** l'élément de fixation de paroi de montage est réalisé par un étrier de fixation (17) réalisé en forme de U, lequel étrier de fixation est attaché à une région supérieure du longeron, en particulier à une région de bride (6) supérieure située du côté du longeron, par une région d'extrémité d'étrier en U (18) supérieure dans la direction de l'axe vertical du véhicule, et lequel étrier de fixation est attaché, par une région d'extrémité d'étrier en U (19) inférieure dans la direction de l'axe vertical du véhicule, directement à une région inférieure du longeron, en particulier à une région de bride inférieure située du côté du longeron, au au longeron (2), indirectement, par l'intermédiaire d'un élément adaptateur (8).

11. Bâti de support selon l'une quelconque des revendications 1 à 10, **caractérisé en ce que** la région de support (11) de cadre de bâti est formée par plusieurs parties de cadre (9, 10) espacées les unes des autres et s'étendant essentiellement parallèlement au longeron (2).

12. Bâti de support selon l'une quelconque des revendications 1 à 11, **caractérisé**
**en ce qu'**au moins une partie des éléments de retenue (4) sont formés par plusieurs parties de cadre (5, 7) réalisées sous forme de barres, parmi lesquelles parties de cadre une première partie de cadre (5) est, vue dans la direction de l'axe vertical du véhicule, attachée à une région supérieure du longeron et une deuxième partie de cadre (7) est attachée à une région du longeron inférieure par rapport à celle-ci,
**en ce que** la deuxième partie de cadre (7) s'étend approximativement horizontalement et fait partie de la région de support (11) de cadre de bâti ou est reliée à ses composants, et
**en ce que** la première partie de cadre (5) est attachée également dans la région de la région de support (11) de cadre de bâti par son extrémité opposée au longeron (2), en particulier y est attachée dans la région d'une partie de cadre (10) située du côté de la région de support et/ou dans la région de l'extrémité libre de la deuxième partie de cadre (7) s'étendant horizontalement.

13. Bâti de support selon l'une quelconque des revendications 1 à 12, **caractérisé en ce que** la paroi de montage (14) est formée par une tôle en acier de préférence en forme de U en section transversale ou par une matière plastique, tandis que le reste des composants porteurs du cadre de bâti (3) sont formés au moins en partie par des sections transversales de profilé creux en métal ou en alliages métalliques.

14. Bâti de support selon l'une quelconque des revendications 1 à 13, **caractérisé en ce que** la pièce rapportée de région de support est formée par au moins un contenant, en particulier un compartiment de rangement et/ou un réservoir de carburant ou d'urée (12).

15. Bâti de support selon l'une quelconque des revendications 1 à 14, **caractérisé en ce que** le bâti de support (1) est formé par un module de pré-montage qui est équipé des pièces rapportées (12, 20, 21, 22, 23, 24) avant le montage du cadre de bâti (3) sur le longeron (2).
